# EUROPEAN PATENT APPLICATION

(11) **EP 1 990 642 A1**
(43) Date of publication of application: **12.11.2008**
(21) Application number: 07009536.9
(22) Date of filing: 11.05.2007
(51) Int. Cl.: G01P 15/06, G01P 15/03

(54) **Shock indicating device**

(71) Applicant: Dodied Iberica S.L.U., 08110 Montcada i Reixac Barcelona (ES)
(72) Inventor: Torresin, Davide, 31030 Colfosco (TV) (IT); Celante, Francesco, 31100 Treviso (IT)

(57) **Abstract**

New shock indicating device that is immediately and intuitively legible and can be made through a quick, simple and economical process, with significant improvements versus existing devices with regard to visibility, properties's lifetime, device's dimensions or manumission risks.

The indicator (10) is made and supplied in a configuration that represents an initial condition, prior to a mechanical shock. In such a condition the magnetic elements (14) are kept in position as a consequence of the attractive magnetic interactions that are developed with the magnetic layer (12). When a system of forces whose resultant exceeds a certain intensity acts on the indicator (10), one or more of the elements (14) of the indicator move to take on a second configuration, tied to the direction of the acting forces and to the work done by them. We have planned setup that maximize the visual effect of the received shock and also provide a read of the shock's intensity.

## Description

The present invention relates to an impact force indicating device, and, more specifically, an impact force indicator that measures and visually displays the extent of this force on the object to which the indicator is applied.

### BACKGROUND ART

Shock indicators are devices that can be applied to other objects, and are used to identify mechanical shocks or significant vibrations that can damage or otherwise compromise the functionality of the objects to which the indicators are applied. For brevity, the term "object" will be referred both to the object itself, monitored through the indicator, and to the object container, to which the device can be alternatively applied. When the object is subjected to a serious shock, as can happen if it falls from a significant height, the indicator is activated and hence makes it evident, in a suitable way, that a mechanical shock has occurred. This information can prove very useful, for example, to the manufacturer of the object to which the indicator is applied, but also to the transporter and the purchaser of the object. Indeed, in this way, it is possible to monitor whether the object has been handled carelessly from the place of manufacture to the place of purchase.

Various shock indicating devices are currently used at industrial level. However, these devices do not immediately visually express the intensity of the shock received by the object to which the indicator is applied. Many devices of this type simply inform the user that the object has suffered an acceleration greater than a predetermined threshold. One of these devices, described in the patent WO 03/107015, is already commercially in use and consists of a small tube containing a viscous coloured liquid, connected to a white chamber, housed in a self-adhesive label. If the device is subjected to a shock greater than a certain predefined threshold, the liquid comes out of the tube and stains the chamber. This change in colour therefore indicates that the object, fitted with the indicator, has been subjected to an acceleration greater than the set threshold value.

However, the tube and the chamber containing the liquid are small, and therefore the state of the indicator is visible only at a short distance from the device. Furthermore, the indicator is subjected to the environmental conditions within it operates: its sensitivity to the intensity of the shock above which the indicator is activated diminishes with temperature and over time. Indeed, the liquid becomes increasingly less viscous as the temperature rises, and tends to gradually dry out, and it is therefore inevitable that the shock detection threshold, necessary for activation of the device, is not constant over time.

Other solutions proposed for indicating that an object has been subjected to an impact, or more generally a mechanical shock, involve the use of mechanical systems of varying complexity (patents US 3,909,568; US 4,361,106; US 5,269,252; US 5,551,279; EP 0598919 A1), consisting of a combination of suitably connected spheres and elastic springs. The spheres manage to come out of their initial housing, due to inertia, only if the resultant of the forces acting on the sphere exceeds a critical value. For example, the solution proposed in patent US 6,848,389 B1 consists of a device having a cavity containing a sphere that is kept in place because it is compressed by the cavity walls, or because it is set in a housing, or because it is connected to an elastic element such as a spring. The sphere is positioned at an initial point; once it has been subjected to an acceleration greater than a predetermined threshold, it moves through a distance proportional to the intensity of the shock.

### DESCRIPTION OF THE INVENTION

It is object of the present description a new shock indicating device that is immediately and intuitively legible, and that can be made through a quick, simple and economical process. The indicator is made and supplied in a configuration that represents an initial condition, prior to a mechanical shock. When a system of forces whose resultant exceeds a certain intensity acts on the indicator, one or more of the elements of the indicator move to a second configuration, tied to the direction of the acting forces and to the mechanical work made by them.

### SHORT DESCRIPTION OF DRAWINGS

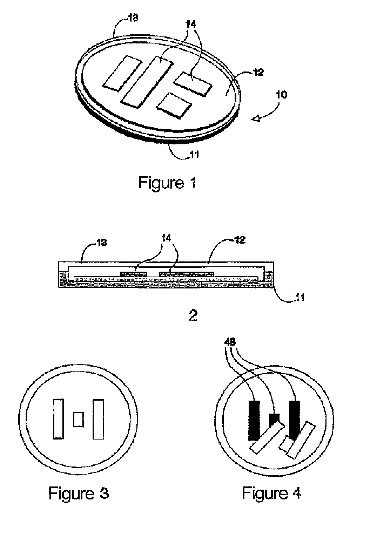

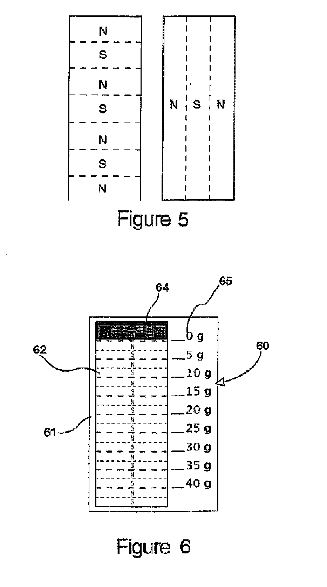

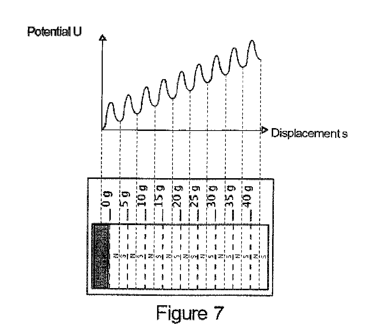

In the description of the preferred embodiments, reference will be made to some figures that show schematically some of the possible arrangements of the elements, according to the present invention, by which the device can be made, with the purpose to give some examples and to better describe the mechanisms exploited. The numbers shown refer to parts that characterize the device. Figure 1 is a top view of a device assembled according to the present invention. Figure 2 shows a side view of the device depicted in Figure 1 along a longitudinal section. Figure 3 regards a further possible configuration for the proposed device, in the condition prior to a mechanical shock, as it appears to the user of the indicator. Figure 4 shows the device of Figure 3 in the state following a mechanical shock, as can be seen by the user. Figure 5 shows two possible arrangements of the poles inside the magnetic parts of the indicator. Figure 6 shows an even further device assembled according to the present invention, which is an indicator and gauge for the intensity of a mechanical shock. Figure 7 graphically expresses the energy barrier that governs the movement of the mobile element of the indicator shown in Figure 6.

### DESCRIPTION OF THE PREFERRED EMBODIMENTS

Though obvious, it is important to specify that the indicator described here is susceptible of being made by assembling the characterizing elements of the invention according to various arrangements, although the illustrations and the detailed description refer only to some illustrative cases, regarding preferential arrangements. These references, as they are deliberately illustrative, have the sole purpose of assisting in the exposition and in the comprehension of the principles on which the invention is based, and there is absolutely no intention to limit the various aspects of the invention to the illustrated arrangements.

A possible embodiment of the indicator in question, in the unaltered state prior to any mechanical shock, has been represented in Figure 1. For descriptive convenience, it is advisable to fix the spatial references assuming that the indicator 10 is attached to a flat horizontal surface. In the ideal organization of the parts, the indicator 10 consists of a base 11, whose topside serves as a support for the other components and whose underside serves as the means of anchorage to the object to which the indicator is to be applied. The anchorage of the indicator is tied to the type of object to which it has to be applied and to the material the base 11 is made of: the device can, for example, be made on an already self-adhesive material, or it can be made on a non-adhesive support (polymeric, paper or even metal) and subsequently spread with glue, or it can be screwed, welded or otherwise fixed to the object to be monitored. A magnetic material 12, or a material susceptible of being magnetised or being a permanent magnet is applied to the topside of the base 11. This material can consist of a ferromagnetic or paramagnetic substance or of a combination of these substances, in the form of foil, wire or solid compacted particulate that is sintered or otherwise mechanically stabilised, preferably by means of polymeric binder. This magnetic layer 12 should preferentially be solid and it constitutes the fixed part of the indicator; the upper surface of this material could be eventually modified with the purpose of protecting it, changing its colour and increasing the visual effect of the indicator, or even with the intention of modifying its roughness. In another possible embodiment, however, the same base 11 could constitute itself the magnetic material with which the fixed layer 12 is made, thus reducing the number of materials needed to realize the device.

One or more solid elements 14, consisting of a magnetic material, are arranged according to a predetermined layout, designed to make the effect of the shock more visible on the indicator. In this case too, the elements can consist of a ferromagnetic or paramagnetic substance or of a combination of these substances, in the form of a compact solid or solid compacted particulate that is sintered or otherwise mechanically, preferably by means of polymeric binder. These elements 14 are kept in position as a consequence of the attractive magnetic interactions that develop with the magnetic layer 12: the frictional force that is generated between the lower surface of these elements 14 and the upper surface of the magnetic layer 12, also prevents these elements from being able to move from their position unless an external force higher than the static friction between the surfaces acts on them.

To guarantee that the mobile elements 14 cannot be removed or moved from their position, a protective part 13 can be applied directly to the magnetic layer 12 or to the base 11. The protective device 13 can be shaped or otherwise raised compared to the mobile elements 14, so as not to disturb their movement in the event of a mechanical shock, or, should it be wished to reduce the sensitivity of the indicator, so as to be in contact with them. In this way the elements also experience a friction with the lower surface of the protective part. This also has the function of preventing the indicator from being altered, by returning the mobile elements 14 to their original position, when it is wished to use the device as an irreversible indicator. This protective part 13 must be fully or partially transparent to allow the user to visually check whether the mobile elements 14 have moved from their initial position. If required, references allowing to increase the visual effect consequent to the moving of the mobile elements 14 can be printed, or otherwise shown, on the protective device 13 or on the fixed magnetic layer 12. As illustrated in Figure 4, the references 48 can wholly reproduce the shape of the mobile elements, or just follow their outline, possibly with the use of different colours, but this does not mean that other reference systems cannot be used.

Figures 3 and 4 schematise the operating principle of an indicator made according to one of the preferred embodiments and show a possible condition that the indicator can be in before and after the mechanical shock. The mobile elements 14 are positioned according to a predetermined arrangement, which constitutes the initial, reference state, of the indicator (Figure 3). As a result of the interactions between the magnetic parts of the indicator, to succeed in causing a movement, the static friction (which develops between the mobile elements 14 and the fixed layer 12) must be exceeded by the external forces acting on the indicator, and consequently on the mobile elements 14.

The limit, beyond which these elements move, therefore, depends on their shape and size, their degree of magnetization and on the surface properties of the interface between them and the fixed layer 12. By piloting these properties, it is also possible to change the dynamic frictional force consequent to the movement of the mobile elements, so that each one stops at a different distance from its initial position (Figure 4). The indicator can therefore be made so that the elements, in their movement, come closer together and, due to reciprocal magnetic interactions, attract each other and stick together, thus increasing the visual effect of indicating that the device has suffered a mechanical shock. This event also reduces the possibility of the indicator being counterfeited: whilst it is possible, using a sufficiently strong magnet, to move a single mobile element back to its original position, this cannot be done if two or more elements have joined together.

The magnetised material with which the mobile elements 14, and possibly the fixed magnetic layer 12, can be made may have 2 or more magnetic poles. In the second case, said poles should preferably be arranged one after the other according to the length or width of the part, as proposed in Figure 5, but that does not prevent the use of other arrangements (alternate poles along the diagonal, in concentric circles, etc.). In this way, the interactions among the mobile magnetic elements 14 and between these elements and the fixed magnetic layer 12 are made more complex, with the purpose of piloting the sensitivity of the indicator to certain types of shock or to make it more difficult to counterfeit.

Also, by doing this, indicators can be made that are able to show the intensity of the mechanical shock on a graduated scale. Figure 6 schematises a possible indicator of this type, in this case, sensitive to forces acting in just one direction. The mobile element 64 can move only in one direction, along which it meets, at intervals, areas in which it is repelled and areas in which it is attracted. The mobile element 64 therefore moves from one area, in which it is attracted, to another, with the distance between the initial and final areas being proportional to the intensity of the shock: reasoning in thermodynamic terms, of potential associated with the forward movement of the mobile element, this shows minimums at the crossing of the areas of attraction between the two magnetic parts 64 and 62 (positions of equilibrium), and maximums at the crossing of the areas of repulsion (Figure 7). The moving forward from one position of equilibrium to the next one, consequent to the action of an external force, is possible only if the kinetic energy assumed by the mobile element 64 is sufficient to make it cross the energy barriers tied to the crossing of the areas of higher potential. The greater the force, the higher the kinetic energy reached by the mobile element, the greater the number of energy barriers that it can cross, the further it can move. Therefore, by showing a graduated scale 65 on the indicator, it is possible to obtain a measurement at intervals of the intensity of the mechanical shock. In the graduated scale, the force intensity can be indicated in many ways, for example comparing it to the gravitational force: the acceleration suffered by the object to which the shock indicating device is applied can be measured in terms of multiples of the gravitational acceleration g, where g = 9,81 m/s².

## Claims

1. A mechanical shock indicating device **characterised by**:
- a base, having a topside and an underside
- a layer of material with magnetic properties fixed to the topside of the base or constituting, in whole or in part, the base itself
- a solid mobile element of material with magnetic properties

2. A device as claimed in claim 1 **characterised in that** the mobile element is kept in a preset position on account of the magnetic interactions that develop between that element and the magnetic layer, provided that said element is not subjected to an acceleration greater than a predetermined threshold, in which case the element moves from its initial position.

3. A mechanical shock indicating device as claimed in the preceding claims, **characterised in that** several mobile elements can be present, arranged according to a predetermined configuration before the shock, which is lost as a result of a mechanical shock acting on the indicator.

4. A mechanical shock indicating device as claimed in the preceding claims, **characterised in that** the mobile element can consist of a magnet, a ferromagnetic or paramagnetic substances or of a combination of the foregoing, in the form of solid material or compacted powder that is sintered or otherwise mechanically stabilised, preferably by means of polymeric binder.

5. A mechanical shock indicating device as claimed in the preceding claims, **characterised in that** the magnetic layer can consist of a magnet, a ferromagnetic or paramagnetic substances or of a combination of the foregoing, in the form of solid material or compacted powder that is sintered or otherwise mechanically stabilised through the use of a binder.

6. A mechanical shock indicating device as claimed in the preceding claims, **characterised in that** a fully or partially transparent upper protective device can also be present and fixed directly to the topside of the magnetic layer or of the base.

7. A mechanical shock indicating device as claimed in the preceding claims, **characterised in that** the protective device can be shaped or otherwise raised compared to the mobile element.

8. A mechanical shock indicating device as claimed in the preceding claims, **characterised in that** the underside of the protective device can be in contact with the mobile element.

9. A mechanical shock indicating device as claimed in the preceding claims, **characterised in that** references representing the initial position of the mobile element can be shown directly on the protective device.

10. A mechanical shock indicating device as claimed in the preceding claims, **characterised in that** references representing the initial position of the mobile element can be shown on the topside of the magnetic layer.

11. A mechanical shock indicating device as claimed in the preceding claims, **characterised in that** the mobile element can be made with a material having 2 or more magnetic poles in sequence.
